# EUROPÄISCHE PATENTSCHRIFT

(11) **EP 2 123 345 B1**
(45) Veröffentlichungstag und Bekanntmachung des Hinweises auf die Patenterteilung: **04.08.2010**
(21) Anmeldenummer: 08009493.1
(22) Anmeldetag: 23.05.2008
(51) Int. Cl.: B01D 53/94, F01N 3/023, F01N 3/035, F01N 3/20

(54) **Vorrichtung zur Reinigung von Dieselabgasen**
Device for cleaning diesel exhaust gases
Dispositif de nettoyage de gaz d'échappement diesel

(43) Veröffentlichungstag der Anmeldung: 25.11.2009
(73) Patentinhaber: Umicore AG & Co. KG, 63457 Hanau-Wolfgang (DE)
(72) Erfinder: Schneider, Wolfgang, 63517 Rodenbach (DE); Mussmann, Lothar, 63069 Offenbach (DE); Jeske, Gerald, 63543 Neuberg (DE); Schiffer, Michael, 63505 Langenselbold (DE); Pfeifer, Marcus, 42719 Solingen (DE)

(56) Entgegenhaltungen:
- WO-A-2007/048971
- DE-A1-102004 040 549
- US-A1- 2004 110 628
- US-A1- 2008 119 353

## Beschreibung

Die Erfindung betrifft eine spezielle Vorrichtung zur Reinigung von Dieselabgasen, die in Strömungsrichtung des Abgases einen Oxidationskatalysator, ein Dieselpartikellfilter mit katalytisch aktiver Beschichtung und, nachgeschaltet zu einer Einbringvorrichtung für ein Reduktionsmittel aus einer externen Reduktionsmittelquelle, einen SCR-Katalysator enthält.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Die Einhaltung künftig in Europa, Nordamerika und Japan geltender gesetzlicher Abgasgrenzwerte für Dieselfahrzeuge erfordert die gleichzeitige Entfernung von Partikeln und Stickoxiden aus dem Abgas. Die Schadgase Kohlenmonoxid und Kohlenwasserstoffe können aus dem mageren Abgas durch Oxidation an einem geeigneten Oxidationskatalysator leicht unschädlich gemacht werden. Zur Entfernung der Partikelemissionen sind Dieselpartikelfilter mit und ohne zusätzliche katalytisch aktive Beschichtung geeignete Aggregate. Die Reduktion der Stickoxide zu Stickstoff ("Entstickung" des Abgases) ist wegen des hohen Sauerstoffgehaltes schwieriger. Ein bekanntes Verfahren ist die selektive katalytische Reduktion (Selective Catalytic Reduktion SCR) der Stickoxide an einem geeigneten Katalysator, kurz SCR-Katalysator. Dieses Verfahren gilt gegenwärtig für die Entstickung von Dieselmotorenabgasen als bevorzugt. Die Verminderung der im Abgas enthaltenden Stickoxide erfolgt im SCR-Verfahren unter Zuhilfenahme eines aus einer externen Quelle in den Abgasstrang eindosierten Reduktionsmittels. Als Reduktionsmittel wird bevorzugt Ammoniak oder eine Ammoniak freisetzende Verbindung wie beispielsweise Harnstoff oder Ammoniumcarbamat eingesetzt. Das gegebenenfalls aus der Vorläuferverbindung in situ erzeugte Ammoniak reagiert am SCR-Katalysator mit den Stickoxiden aus dem Abgas in einer Komproportionierungsreaktion zu Stickstoff und Wasser.

Derzeit ist, um den aufkommenden gesetzlichen Vorgaben gerecht zu werden, eine Kombination der verschiedenen Abgasreinigungsaggregate unumgänglich. Eine Vorrichtung zur Reinigung von Dieselmotorenabgasen muß mindestens einen oxidationsaktiven Katalysator und zur Entstickung einen SCR-Katalysator mit vorgeschalteter Einbringvorrichtung für Reduktionsmittel (bevorzugt Ammoniak oder Harnstofflösung) und externer Reduktionsmittelquelle (beispielsweise einen Zusatztank mit Harnstofflösung oder einen Ammoniakspeicher) enthalten. Falls es durch Optimierung der motorischen Verbrennung nicht gelingt, die Partikelemissionen so gering zu halten, daß diese über dem Oxidationskatalysator durch direkte Oxidation mit Sauerstoff entfernt werden können, ist zusätzlich der Einsatz eines Partikelfilters notwendig.

Entsprechende Abgasreinigungssysteme sind bereits beschrieben worden; einige befinden sich derzeit in der praktischen Erprobung.

Die US2008/119353 A1 beschreibt eine Vorrichtung zur Reinigung von Dieselabgasen die in Strömungsrichtung des Abgases einen Oxidationskatalysator, ein Partikelfilter, z.B. mit katalytischer Beschichtung, und einen SCR-Katalysator enthält, wobei Oxidationskatalysator oder Partikelfilter jeweils Palladium und Platin im Gesamtverhältnis 1:2 enthalten können.

So beschreibt die EP-B-1 054 722 ein System zur Behandlung von NOₓ- und Partikelhaltigen Dieselabgasen, worin ein Oxidationskatalysator einem Partikelfilter vorgeschaltet ist. Abströmseitig zum Partikelfilter sind eine Reduktionsmittelquelle und eine Dosiereinrichtung für das Reduktionsmittel, sowie ein SCR-Katalysator angeordnet. Im hier beschriebenen Verfahren wird der NO₂-Anteil im Abgas und somit das NO₂/NOₓ-Verhältnis durch wenigstens teilweise Oxidation von NO am Oxidationskatalysator erhöht, wobei das NO/NO₂-Verhättnis bevorzugt auf "ein vorbestimmtes, für den SCR-Katalysator optimales Niveau eingestellt wird".

Dieses für den SCR-Katalysator optimale NO/NO₂-Verhältnis liegt für alle derzeit bekannten SCR-Katalysatoren um 1. Besteht das im Abgas enthaltene NOₓ nur aus NO und NO₂, so liegt das optimale NO₂/NOₓ-Verhättnis zwischen 0,3 und 0,7, bevorzugt zwischen 0,4 und 0,6 und besonders bevorzugt bei 0,5. Ob dieses Verhältnis vor dem SCR-Katalysator in einem System nach EP-B-1 054 722 erreicht wird, hängt von der Abgastemperatur und somit vom Betriebszustand des Motors, von der Aktivität des Oxidationskatalysators und der Ausgestaltung und Rußbeladung des dem Oxidationskatalysator nachgeschalteten Dieselpartikelfilters ab.

Das unbehandelte Abgas herkömmlicher Dieselmotoren enthält nur einen sehr geringen Anteil NO₂ im NOₓ. Den Hauptanteil der Stickoxide stellt Stickstoffmonoxid NO. Bei Überleiten dieses Rohabgases über den Oxidationskatalysator wird NO mindestens anteilig zu NO₂ oxidiert. Wie hoch die NO₂-Bildungsrate ist, hängt von der Aktivität des Oxidationskatalysators und der Abgastemperatur ab. Ist auf dem abströmseitig angeordneten Dieselpartikelfilter eine signifikante Menge an Ruß abgeschieden, so wird der nach dem Oxidationskatalysator vorliegende NO₂-Anteil im NOₓ bei aus-reichender Abgastemperatur wieder verringert. Da bei der Oxidation von Ruß mit NO₂ aus dem NO₂ überwiegend NO entsteht, erfolgt dadurch jedoch keine Entstickung des Abgases. Dies muß über dem nachgeordneten SCR-Katalysator erfolgen, wofür das NO₂/NOₓ-Verhättnis über der Gesamtheit von Oxidationskatalysator und Dieselpartikelfilter optimal eingestellt werden muß. EP-B-1 054 722 liefert jedoch keine technische Lehre dazu, wie diese Einstellung des NO₂/NOₓ-Verhältnisses im Abgas vor dem SCR-Katalysator über der Gesamtheit von Oxidationskatalysator und Filter bewerkstelligt werden kann.

Eine wichtige Aufgabe der vorliegenden Erfindung ist es, eine technische Lehre zur Einstellung eines möglichst optimalen NO₂/NOₓ-Verhältnisses im Abgas vor SCR-Katalysator in einem Abgasreinigungssystem gemäß der EP-B-1 054 722 bereitzustellen.

Ein weiteres in der EP-B-1 054 722 nicht diskutiertes, in der Praxis aber auftretendes Problem besteht darin, daß die in diesem System erfolgende "passive" Partikelfilterregeneration, d.h. der "in situ" erfolgende Abbrand von Ruß durch Oxidation mit über dem Oxidationskatalysator erzeugtem NO₂, allein in der Regel nicht ausreichend ist, um ein Zusetzen des Partikelfilters mit Ruß und ein dadurch bedingtes Ansteigen des Abgasgegendruckes auf nicht akzeptable Werte zu verhindern. Es sind applikative Hilfsmaßnahmen nötig, durch die beispielweise zusätzliche, "aktive" Dieselpartikelfifterregenerationen vorgenommen werden können, wenn der Abgasgegendruck über dem Partikelfilter einen kritischen Schwellwert übersteigt.

Zu diesen Hilfsmaßnahmen gehört die zusätzliche Einspritzung von Kraftstoff in den Abgasstrang vor Oxidationskatalysator oder in den Zylinder des Brennraums während des Auslaßkolbenhubes. Der mit Hilfe dieser Einrichtung von Zeit zu Zeit ins Abgas gelangende unverbrannte Kraftstoff wird über dem Oxidationskatalysator unter Freisetzung von Wärme verbrannt; der Oxidationskatalysator wird als "Heizkatalysator" verwendet, um den nachgeschalteten Dieselpartikelfilter auf Temperaturen aufzuheizen, die deutlich über der Rußzündtemperatur in Sauerstoff-haltiger Atmosphäre, d.h. im Bereich 500 bis 650°C liegen. Durch den so erzielten Temperaturanstieg werden die Rußpartikel mit dem im Abgas enthaltenden Sauerstoff "abgebrannt".

Damit der Oxidationskatalysator als "Heizkatalysator" in der "aktiven" Dieselpartikelfilterregeneration arbeiten kann, muß er einige Anforderungen hinsichtlich Umsatzverhalten und Alterungsstabilität erfüllen. Er muß kurzzeitig hohe Mengen unverbrannter Kohlenwasserstoffe oxidativ umsetzen können, ohne daß dabei die Oxidationsreaktion "absäuft" und so zum Erliegen kommt. Dabei muß der Umsatz der unverbrannten Kohlenwasserstoffe möglichst vollständig sein, da der Durchbruch unverbrannter Kohlenwasserstoffe durch den Oxidationskatalysator spätestens am SCR-Katalysator, der weiter abströmseitig angeordnet ist, zu Vergiftungen desselben führen kann. Ein Durchbruch unverbrannter Kohlenwasserstoffe am Ende der Abgasanlage kann darüber hinaus zur Nichteinhaltung der gesetzlichen Grenzwerte führen. Je mehr Kraftstoff vollständig über dem Oxidationskatalysator verbrannt werden kann, um so flexibler gestaltet sich die Strategie für die aktive Regeneration. Weiterhin ist es eine wichtige Anforderung, daß der Oxidationskatalysator schon bei niedrigen Abgastemperaturen (180 bis 250°C) "zündet".

In Summe soll ein auch als Heizkatalysator ideal geeigneter Oxidationskatalysator also sehr hohe HC-Umsatzraten schon bei möglichst geringen Abgastemperaturen zeigen, wobei der HC-Umsatz ab Erreichen der "Zündtemperatur" (Light-Off-Temperatur) möglichst sprunghaft auf Maximalwerte ansteigen soll. Außerdem muß der Katalysator so alterungsstabil sein, daß er durch die während der Kohlenwasserstoffverbrennung erzeugte Exothermie in seiner Aktivität nicht zu stark beeinträchtigt wird. Diese Leistungsanforderungen werden im folgenden zusammenfassend als "heat-up-Performance" bezeichnet.

Es ist eine weitere wichtige Aufgabe der vorliegenden Erfindung, ein Abgasreinigungssystem mit dem in EP-B-1 054 722 beschriebenen Grundaufbau bereitzustellen, in dem der Oxidationskatalysator im Falle einer "aktiven" Partikelfilterregeneration eine möglichst gute "heat-up-Performance" zeigt.

Die beiden genannten Aufgaben werden durch eine Vorrichtung zur Reinigung von Dieselabgasen gelöst, die in Strömungsrichtung des Abgases einen Oxidationskatalysator, ein Dieselpartikelfilter mit katalytisch aktiver Beschichtung, eine Einbringvorrichtung für ein Reduktionsmittel aus einer externen Reduktionsmittelquelle und einen SCR-Katalysator enthält, wobei der Oxidationskatalysator und die katalytisch aktive Beschichtung des Dieselpartikelfilters Palladium und Platin enthalten. Die Vorrichtung ist **dadurch gekennzeichnet, daß** das Verhältnis der Gesamtmenge an Palladium zur Gesamtmenge an Platin zwischen 8 : 1 und 1 : 15 liegt, wobei zugleich das Verhältnis Platin : Palladium im Oxidationskatalysator nicht größer als 6 : 1 ist, während das Verhältnis Platin : Palladium in der katalytisch aktiven Beschichtung des Dieselpartikelfilters nicht geringer als 10 : 1 ist.

Mit der erfindungsgemäßen Vorrichtung ist einerseits gewährleistet, daß vor dem SCR-Katalysator in der überwiegenden Mehrzahl der für Dieselfahrzeuge typischen Betriebszustände, in denen signifikante Stickoxid-Gehalte im zu reinigenden Abgas vorhanden sind, ein möglichst optimales NO₂/NOₓ-Verhältnis anliegt. Andererseits ist gewährleistet, daß der Oxidationskatalystor eine hinreichend gute "heat-up-Performance" aufweist, um in wichtigen Betriebspunkten eine aktive" Dieselpartikelfilterregeneration zu ermöglichen.

Der Erfindung liegen die folgenden Erkenntnisse zugrunde:

Es ist bekannt, daß Oxidationskatalysatoren mit hohen Platingehalten in Dieselabgasen hohe Umsatzraten in der Oxidation von NO zu NO₂ bewirken. Es ist weiterhin bekannt, daß Oxidationskatalysatoren, die viel Palladium enthalten, hohe Mengen unverbrannter Kohlenwasserstoffe im Dieselabgas schon bei geringen Temperaturen recht vollständig umsetzen können. Leider zeigen Katalysatoren mit hohen Platingehalten die Neigung, bei anstehenden hohen Kohlenwasserstoffgehalten zu verlöschen, während Palladium keine hinreichende NO-Oxidationsaktivität aufweist. Hierin liegt ein Zielkonflikt zwischen der geforderten NO-Umsatzleistung eines Katalysators einerseits und seiner "heat-up-Performance" andererseits. Dieser Konflikt kann schon aus Kostengründen nicht durch eine einfache "Addition" der beiden Edelmetalle Palladium und Platin im Oxidationskatalysator aufgelöst werden.

Die Erfinder haben nun festgestellt, daß es vorteilhaft ist, wenn der wesentliche Beitrag zur NO₂-Bildung beim Überleiten des Abgasstromes über das Dieselpartikelfilter erfolgt. Dies ist insofern überraschend, als daß bislang angenommen wurde, man könne nur durch hohe NO₂-Bildungsraten über dem Oxidationskatalysator ein hinreichendes Maß an "passiver" Partikelfilterregeneration erzielen, um die Anzahl ergänzender "aktiver" Dieselpartikelfilterregenerationen möglichst gering zu halten. Die Arbeiten der Erfinder deuten jedoch darauf hin, daß ein Mehraufwand an "aktiver" Partikelfilterregeneration bei zielgerichteter Verteilung der Edelmetalle Platin und Palladium über Oxidationskatalysator und Partikelfilter vermieden werden und trotzdem eine gute "heat-up-Performance" des Oxidationskatalysators bei gleichzeitiger Einstellung eines optimierten NO₂/NOₓ-Verhältnis im Abgas vor SCR-Katalysator gewährleistet werden kann.

Überraschenderweise hat sich gezeigt, daß die Gesamtmenge an Edelmetall in der erfindungsgemäßen Vorrichtung einen untergeordneten Einfluß auf das nach Partikelfilter erzielbare NO₂/NOₓ-Verhältnis hat. Von Bedeutung für das NO₂-äildungsverhalten sind dagegen das Platin : Palladium-Verhältnis und die Verteilung der Edelmetalle Platin und Palladium über die Abgasreinigungsaggregate Oxidationskatalysator und Partikelfilter.

Im Unterschied dazu zeigt sich, daß die "heat-up"-Performance des Oxidationskatalysators mit zunehmendem Edelmetallgehalt des Oxidationskatalysator verbessert wird, vorausgesetzt, daß das Verhältnis Platin : Palladium im Oxidationskatalysator einen Wert von 6 : 1 nicht übersteigt. Bevorzugt liegt das Verhältnis Platin : Palladium im Oxidationskatalysator zwischen 0,5 : 1 und 3 : 1, besonders bevorzugt zwischen 1 : 1 und 2,5 : 1. Um zugleich ein für den nachgeschalteten SCR-Katalysator möglichst optimales NO₂/NOₓ-Verhältnis nach Dieselpartikelfilter zu erzielen, ist es erforderlich, daß das Verhältnis Platin : Palladium in der katalytisch aktiven Beschichtung des Dieselpartikelfifters nicht geringer ist als 10 : 1. Das Verhältnis von Platin zu Palladium in der katalytisch aktiven Beschichtung des Dieselpartikelfilters liegt in bevorzugten Ausführungsformen zwischen 12 : 1 und 14 : 1.

Werden diese Rahmenbedingungen eingehalten, so kann das Verhältnis der Gesamtmenge an Palladium zur Gesamtmenge an Platin in der Vorrichtung über einen sehr weiten Bereich variiert werden, nämlich zwischen 8 : 1 und 1 : 15, bevorzugt zwischen 2 : 1 und 1 : 10 und besonders bevorzugt zwischen 1 : 1 und 1 : 7, womit sich kostenoptimierte Abgassysteme für praktisch alle derzeit in Anwendung und Testung befindlichen und viele zukünftige Dieselfahrzeuge bereitstellen lassen.

Typischerweise liegen Oxidationskatalysator und Dieselpartikelfilter in Form von zwei separaten Bauteilen vor. Diese können, wenn beispielsweise in der Abgasanlage eines Diesel-Pkw nur wenig Bauraum zur Verfügung steht, gegenenenfalls in einem Gehäuse untergebracht sein. Ebenso ist die Positionierung in zwei verschiedenen Gehäusen an unterschiedlichen Positionen (in Motomähe und/oder im Unterboden des Fahrzeugs) möglich.

Üblicherweise besteht der Oxidationskatalysator aus einer Platin und Palladium enthaltenden katalytisch aktiven Beschichtung, die auf einen keramischen oder metallischen Durchflußwabenkörper aufgebracht ist. Bevorzugt werden keramische Durchflußwabenkörper eingesetzt, die Zelldichten von 15 bis 150 Zellen pro Quadratzentimeter, besonders bevorzugt 60 bis 100 Zellen pro Quadratzentimeter aufweisen. Die Kanalwandstärke bevorzugter Tragkörpern liegt zwischen 0,05 und 0,25 Millimetern, besonders bevorzugt zwischen 0,07 und 0,17 Millimetern.

Das Dieselpartikelfilter besteht aus einer Platin und Palladium enthaltenden katalytisch aktiven Beschichtung und einem Filterkörper. Als Filterkörper sind metallische und keramische Filterkörper geeignet, beispielsweise metallische Gewebe- und Gestrickkörper. Bevorzugt werden Wandflußfiltersubstrate aus keramischem Material oder Siliciumcarbid eingesetzt. Besonders bevorzugt ist die Platin und Palladium enthaftende katalytisch aktive Beschichtung in die Wand eines solchen Wandflußfiltersubstrats aus keramischem Material oder Siliciumcarbid eingebracht.

In der erfindungsgemäßen Vorrichtung werden geeigneterweise ein Oxidationskatalysator, der aus einer Platin und Palladium enthaltenden katalytisch aktiven Beschichtung auf einem keramischen oder metallischen Durchflußwabenkörper besteht, und ein Dieselpartikelfilter, das aus einer Platin und Palladium enthaltenden katalytisch aktiven Beschichtung und einem Filterkörper besteht, so ausgewählt, daß das Volumenverhältnis von Durchflußwabenkörper zu Filterkörper zwischen 1 : 1,5 und 1 : 5 liegt. Bevorzugt beträgt das Volumenverhältnis von Durchflußwabenkörper zu Filterkörper zwischen 1 : 2 und 1 : 4.

Sowohl im Oxidationskatalysator als auch im Dieselpartikelfilter einer erfindungsgemäßen Vorrichtung sind Platin und Palladium in einer katalytisch aktiven Beschichtung enthalten. Die Edelmetalle Platin und Palladium liegen bevorzugt auf einem oder mehreren oxidischen Trägermaterialien vor. Sie können getrennt auf gegebenenfalls unterschiedlichen Trägermaterialien aufgebracht sein oder gemeinsam auf einem oder mehreren Trägermaterialien vorliegen. Dabei sind die Trägermaterialien ausgewählt aus der Gruppe bestehend aus Aluminiumoxid, Lanthanoxid-stabilisiertem Aluminiumoxid, Alumosilikat, Siliciumdioxid, Titandioxid, Ceroxid, Cer-Zirkon-Mischoxid, Seltenerdmetall-Sesquioxid, Zeolith und Mischungen davon. Bevorzugt werden Aluminiumoxid, Lanthanoxid-stabilisiertes Aluminiumoxid, Alumosilikat, Titandioxid und Zeolith als Trägermaterialien eingesetzt.

In den bevorzugten Ausführungsformen des Oxidationskatalysators liegen Platin und/oder Palladium aufgebracht auf Aluminiumoxid und/oder Aluminiumsilikat als Trägermaterial vor. In den bevorzugten Ausführungsformen des Dieselpartikelfilters liegen Platin und/oder Palladium aufgebracht auf Lanthan-stabilisiertem Aluminiumoxid vor. Die katalytisch aktive Beschichtung des Oxidationskatalysators enthält außerdem bevorzugt Zeolith. Ob Zeolith auch in der katalytisch aktiven Beschichtung des Dieselpartikelfilters vorhanden sein sollte, hängt im wesentlichen vom Anwendungsbereich der erfindungsgemäßen Vorrichtung ab. Soll die Vorrichtung zur Reinigung von Dieselabgasen in Personenkraftwagen eingesetzt werden, so sind Dieselpartikelfilter, die Zeolith in der katalytisch aktiven Beschichtung enthalten, bevorzugt. Bei Nutzfahrzeuganwendungen führt ein wirksamer Zeolith-Anteil in der katalytisch aktiven Beschichtung des Dieselpartikelfilters jedoch nicht selten zu unerwünschten Nachteilen bezüglich des Staudruckverhaltens, weshalb hier Zeolith-freie Dieselpartikelfilter häufig geeigneter sind.

Die Aufbringung der Edelmetalle auf die genannten, bevorzugten Trägermaterialien erfolgt nach den üblichen, dem Fachmann bekannten Verfahren der Injektion, der Auffällung, der mit "incipient wetness" bezeichneten Arbeitsmethode und anderen, aus der Literatur bekannten Techniken. Welche der sich im Stand der Technik darstellenden Methoden jeweils zu bevorzugen ist, hängt nicht zuletzt von der damit erzielbaren Edelmetallpartikelgröße und der Zielapplikation ab.

So wurde beobachtet, daß an Platin-reichen Edelmetallpartikeln mit einer mittleren Partikelgröße von 5 bis 10 Nanometern besonders hohe Ausbeuten in der NO-Oxidation erzielt werden können. Um solche großen, Platin-reichen Edelmetallpartikel auf dem Trägermaterial zu erzeugen, kann man beispielsweise ein herkömmliches Fällungsinjektionsverfahren unter Verwendung einer nur mäßig auf dem Trägermaterial sorbierenden Edelmetallvorläuferverbindung wählen. Wird eine derart hergestellte Beschichtungssuspension in die Wand eines Wandflußfiltersubstrates eingebracht, so entsteht ein katalytisch aktiviertes Dieselpartikelfilter mit ausgesprochen hoher NO-Oxidationsleistung im frisch hergestellten Zustand. Ein solches Bauteil eignet sich in einer erfindungsgemäßen Abgasreinigungsvorrichtung in Kombination mit einem Oxidationskatalysator, der ein Platin : Palladium-Verhältnis nicht größer als 6 : 1 aufweist, besonders zur Reinigung von Dieselabgasen in Applikationen mit sehr geringer Betriebstemperatur des Filters (mittlere Temperatur im NEDC < 250°C).

Für Hochtemperaturanwendungen oder zur Reinigung stark partikelhaltiger Dieselabgase, wenn häufige "aktive" Dieselpartikelfilterregenerationen nötig sind, ist es dagegen von größerer Bedeutung, daß die Abgasreinigungsvorrichtung und somit die Abgasreingungsaggregate eine hohe thermische Alterungsstabilität aufweisen. Die für eine solche Anwendung bevorzugten Edelmetall-haltigen Komponenten können beispielsweise dadurch erzeugt werden, daß das meist oxidische Trägermaterial mit einer geeigneten wässrigen Lösung einer Edelmetallvorläuferverbindung porenfüllend, jedoch unter Erhalt seiner Rieselfähigkeit befeuchtet wird. Dann wird das Edelmetall in den Poren in einem sich anschließenden Schnellkalzinationsverfahren thermisch fixiert. Die aus einem solchen Prozeß resultierenden edelmetallhaftigen Pulverkomponenten können zu einer Beschichtungssuspension verarbeitet und auf einen Durchflußwabenkörper und/oder Filterkörper auf- bzw. eingebracht werden.

Die Aufbringung der katalytisch aktiven Beschichtung auf Durchflußwabenkörper und Filterkörper bzw. die Einbringung derselben in die Wand des Wandflußfiltersubstrates erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff), die für diese Abgasreinigungsaggregate aus dem Stand der Technik hinreichend bekannt sind.

In der erfindungsgemäßen Vorrichtung können alle bisher bekannten SCR-Katalysatoren eingesetzt werden. Gut geeignet sind insbesondere Vanadiumoxid-basierte SCR-Katalysatoren und mit Eisen und/oder Kuper ausgetauschte Zeolithverbindungen, wie sie aus dem Stand der Technik bekannt und kommerziell erhältlich sind. Ferner eignen sich Übergangsmetalloxid-basierte SCR-Katalysatortechnologien, die beispielsweise Ceroxide oder Cer-Übergangsmetall-Mischoxide und/oder Wolframoxid enthalten.

Die Vorrichtung eignet sich zur Reinigung von Dieselabgasen und kann bevorzugt in Kraftfahrzeugen eingesetzt werden. Beim Durchleiten der zu reinigenden Dieselabgase durch die erfindungsgemäße Vorrichtung unter den für diese Aufgabe typischen Bedingungen werden alle im Dieselabgas enthaltenen Emissionen vermindert.

Im folgenden sollen einige Beispiele und Figuren die Erfindung näher beschreiben. Es zeigen:

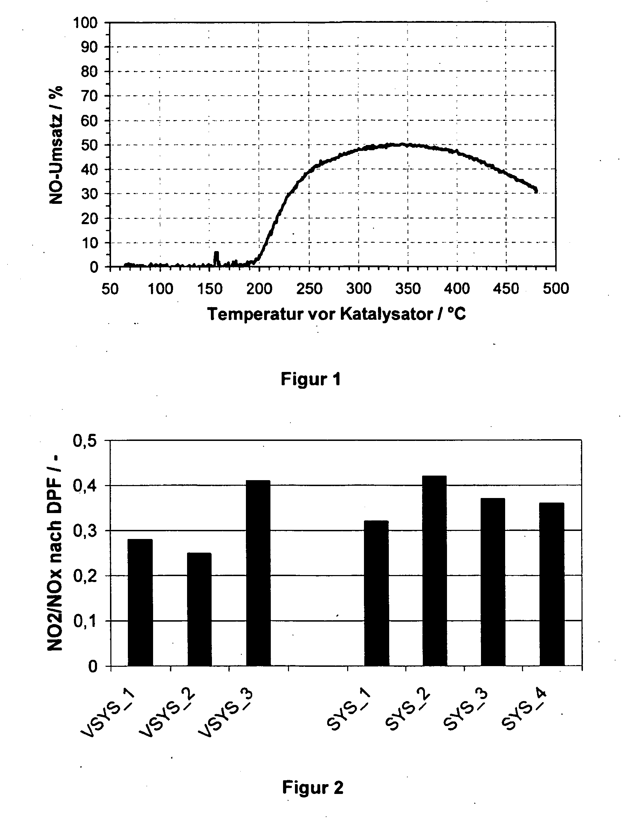

- Figur 1:: NO-Umsatz im Modellgas als Funktion der Temperatur vor Katalysator als typisches Meßergebnis bei der Bestimmung des mittleren NO₂/NOₓ- Verhältnis für den Temperaturbereich 200 bis 400°C; das mittlere NO₂/NOₓ-Verhältnis wird daraus durch Ermittlung der Fläche unter der Kurve (Integration) und Division durch die die Summe aus derselben und des entsprechenden Integralwerts über der Kurve (bis 100 %) in den Grenzen 200 - 400°C erhalten.
- Figur 2:: Mittleres NO₂/NOₓ-Verhältnis 200 - 400°C im Modellabgas nach Diesel- partikelfilter in den erfindungsgemäßen Systemen SYS_1, SYS_2, SYS_3 und SYS_4 und in den Vergleichssystemen VSYS_1. VSYS_2 und VSYS_3.

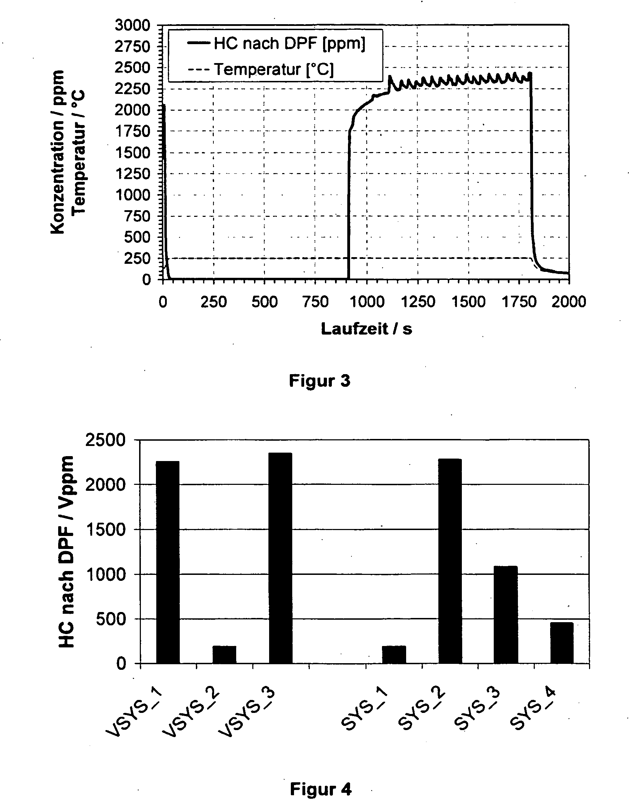

- Figur 3:: Verlauf der HC-Konzentration nach Dieselpartikelfilter als Funktion der Meßzeit in einem "Heat-up-Experiment" im Modellabgas; Start der n-Do- dekan-Dosierung bei t = 900 s; Temperatur im Reaktor = const. = 250°C; Versuchsende bei t = 1800 s; zur Beurteilung der "Heat-up-Per- formance" wird die Höhe des HC-Durchbruchs nach Einschwingen (im gezeigten Beispiel zwischen bei t = 1500-1750 s) angegeben.
- Figur 4:: HC-Durchbruch [Vppm] im "Heat-up-Experiment" nach Dieselpartikel- filter in den erfindungsgemäßen Systemen SYS_1, SYS_2, SYS_3 und SYS_4 und in den Vergleichssystemen VSYS_1, VSYS_2 und VSYS_3.

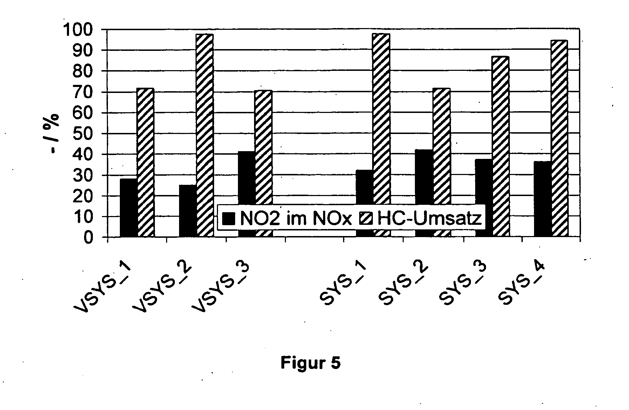

- Figur 5:: Zusammengefaßtes Ergebnis der Modellgasuntersuchungen - über dem Gesamtsystem erzielter HC-Umsatz [%] im "Heat-up-Experiment" und mittleres NO₂/NOₓ-Verhältnis in [% NO₂ im NOₓ] für den Temperatur- bereich 200 bis 400°C in den erfindungsgemäßen Systemen SYS_1, SYS_2, SYS_3 und SYS_4 und in den Vergleichssystemen VSYS_1, VSYS_2 und VSYS_3.

### Untersuchungen im Modellabgas:

Zur Untersuchung im Modellabgas wurden verschiedene Oxidationskatalysatoren und Dieselpartikelfilter hergestellt. Edelmetallmengen und -verhältnisse wurden so gewählt, daß für alle Vorrichtungen enthaltend Oxidationskatalysator und Dieselpartikelfilter dieselben Edelmetallkosten resultierten.

Zur Herstellung von erfindungsgemäßen Oxidationskatalysatoren und Vergleichskatalysatoren wurde homogenes Silicium-Aluminium-Mischoxid (5 Gew.-% SiO₂ bezogen auf die Gesamtmasse des Mischoxids; BET-Oberfläche: 150 m²/g) mit einer wässrigen Lösung von Tetraaminplatin-acetat und Tetraaminpalladium-nitrat porenfüllend befeuchtet, wobei die Rieselfähigkeit des Pulvers erhalten blieb. Dabei wurden Edelmetallgehalt der Lösung und Edelmetallverhältnis entsprechend der zu erreichenden Zielmengen und -verhältnisses (vgl. nachstehende Tabelle) in den herzustellenden Katalysatoren gewählt. Zur Fixierung des Edelmetalls wurde das Feuchtpulver für die Dauer von 4 Stunden bei 300°C kalziniert. Das so erhaltene katalytisch aktivierte Pulver wurde in Wasser suspendiert, vermahlen und in einem konventionellen Tauchbeschichtungsverfahren auf einen zylindrischen Durchflußwabenkörper mit einem Durchmesser von 118 Millimetern und einer Länge von 61 Millimetern aufgebracht. Der Durchflußwabenkörper wies 62 Zellen pro Quadratzentimeter und eine Zellwandstärke von 0,17 Millimetern auf. Die resultierenden Katalysatoren wurden für die Dauer von 4 Stunden bei 300°C kalziniert und anschließend bei 500°C für die Dauer von 2 Stunden mit Formiergas behandelt. Die derart hergestellten Oxidationskatalysatoren sind in der nachfolgenden Tabelle zusammengestellt:

| **Kat-Ident** | **Gesamtedelmetallgehalt [g/L ]** | **Edelmetallverhältnis Pt : Pd** |
|---|---|---|
| VDOC_A | 2,108 | 20 : 1 |
| VDOC_B | 0,773 | 20 : 1 |
| DOC_1 | 2,277 | 6 : 1 |
| DOC_2 | 2,229 | 6 : 1 |
| DOC_3 | 0,834 | 6 : 1 |
| DOC_4 | 2,103 | 2 : 1 |
| DOC_5 | 2,848 | 1 : 1 |

### Anmerkungen:

- Der Gesamtedelmetallgehalt in Gramm ist bezogen auf das Volumen des Katalysators.
- Kat-Idents mit Präfix "DOC" bezeichnen erfindungsgemäße Katalysatoren. Kat-Idents mit Präfix "VDOC" bezeichnen Vergleichskatalysatoren.

Zur Herstellung der für die Systeme benötigten katalytisch beschichteten Dieselpartikelfilter wurde ein Lanthanoxid-stabilisiertes Aluminiumoxid (4 Gew.-% La₂O₃ bezogen auf die Gesamtmasse des Mischoxids; BET-Oberfläche: 180 m²/g) mit einer wässrigen Lösung von Tetraaminplatin-acetat und Tetraaminpalladium-nitrat porenfüllend befeuchtet, wobei die Rieselfähigkeit des Pulvers erhalten blieb. Dabei wurden Edelmetallgehalt der Lösung und Edelmetallverhältnis entsprechend der zu erreichenden Zielmengen und -verhäftnisses (vgl. nachstehende Tabelle) in den herzustellenden beschichteten Partikelfilter gewählt. Zur Fixierung des Edelmetalls wurde das Feuchtpulver für die Dauer von 4 Stunden bei 300°C kalziniert. Das so erhaltene katalytisch aktivierte Pulver wurde in Wasser suspendiert, vermahlen und in einem konventionellen Tauchbeschichtungsverfahren in die Wände eines zylindrischen, keramischen Wandflußfiltersubstrats (DURATRAP CO 200/12) mit einem Durchmesser von 144 Millimetern und einer Länge von 152,4 Millimetern eingebracht. Dabei wurde eine aufzubringende Beschichtungsmenge von 15 Gramm pro Liter, bezogen auf das Substratvolumen, gewählt. Das Wandflußfiltersubstrat wies 31 wechselseitig verschlossene Zellen pro Quadratzentimeter und eine Zellwandstärke von 0,3 Millimetern auf. Die resultierenden katalytisch aktivierten Dieselpartikelfilter wurden für die Dauer von 4 Stunden bei 300°C kalziniert und anschließend bei 500°C für die Dauer von 2 Stunden mit Formiergas behandelt. Der nachfolgenden Tabelle ist zu entnehmen, welche Dieselpartikelfilter derart hergestellt wurden:

| **Kat-Ident** | **Gesamtedelmetallgehalt [g/L ]** | **Edelmetallverhältnis Pt : Pd** |
|---|---|---|
| VDPF_A | 0,176 | 4 : 1 |
| DPF_1 | 0,706 | 12 : 1 |
| DPF_2 | 0,177 | 12 : 1 |
| DPF_3 | 0,353 | 12 : 1 |
| DPF_4 | 0,265 | 14 : 1 |

Anmerkungen:
   - Der Gesamtedelmetallgehalt in Gramm ist bezogen auf das Volumen des Dieselpartikelfilters.
   - Kat-Idents mit Präfix "DPF" bezeichnen erfindungsgemäße Dieselpartikelfilter. Kat-Idents mit Präfix "VDPF" bezeichnen Vergleichsteile.

Die so erhaltenen Oxidationskatalysatoren und Dieselpartikelfilter wurden vor Charakterisierung einer synthetischen Alterungsprozedur unterzogen. Dazu wurden die Teile in einem Ofen bei 750°C für die Dauer von 16 Stunden einer Atmosphäre aus 10 Vol.-% Wasserdampf und 10 Vol.-% Sauerstoff in Stickstoff ausgesetzt.

Zur anschließenden Untersuchung im Modellabgas wurden den so behandelten Oxidationskatalysatoren und Dieselpartikelfiltern Bohrkerne mit einem Durchmesser von 25,4 Millimetern entnommen. Die so erhaltenen Prüflinge wurden zu den in der nachstehenden Tabelle aufgeführten Systemen zusammengesetzt und getestet:

| **System-ldent** | **Oxidationskatalysator (Anströmseite)** | **Diesel Partikelfilter (Abströmseite)** | **Gesamt-Edelmetallgehalt [g/L]** | **Gesamt-Edelmetallverhältnis Pt : Pd** | **Volumenverhältnis DOC : DPF** |
|---|---|---|---|---|---|
| VSYS_1 | VDOC_A | VDPF_A | 0,729 | 12,5 : 1 | 1 : 2,5 |
| VSYS_2 | DOC_1 | VDPF_A | 0,777 | 5,6 : 1 | 1 : 2,5 |
| VSYS_3 | VDOC_B | DPF_1 | 0,725 | 13,7 : 1 | 1 : 2,5 |
| SYS_1 | DOC_2 | DPF_2 | 0,764 | 6,6 : 1 | 1 : 2,5 |
| SYS_2 | DOC_3 | DPF_1 | 0,743 | 9,2 : 1 | 1 : 2,5 |
| SYS_3 | DOC_4 | DPF_3 | 0,853 | 2,9 : 1 | 1 : 2,5 |
| SYS_4 | DOC_5 | DPF_4 | 1,003 | 1,4 : 1 | 1 : 2,5 |

### Anmerkungen:

- Der Gesamtedelmetallgehalt in Gramm ist bezogen auf das Gesamtvolumen der Abgasreinigungsaggregate.
- System-Idents mit Präfix "SYS" bezeichnen erfindungsgemäße Systemgestaltungen. System-Idents mit Präfix "VSYS" bezeichnen Vergleichssysteme.

Oxidationskatalysator und Dieselpartikelfilter wurden in den Reaktor einer Labor-Modellgasanlage eingebaut, wobei der Oxidationskatalysator anströmseitig, das Dieselpartikelfilter abströmseitig angeordnet wurde. Zunächst wurde das nach Dieselpartikelfilter erzielbare mittlere NO₂/NOₓ-Verhältnis bestimmt. Dazu wurden folgende Versuchsbedingungen eingestellt:

| **Modellgaszusammensetzung** | |
|---|---|
| CO [Vppm]: | 350 |
| HC (Propen : Propan = 2 : 1); [Vppm C₁]: | 270 |
| NO [Vppm]: | 270 |
| H₂ [Vppm]: | 120 |
| CO₂ [Vol.-%]: | 10,7 |
| H₂O [Vol.-%]: | 10 |
| O₂ [Vol.-%]: | 6 |

| **Allgemeine Reaktionsbedingungen** | |
|---|---|
| Raumgeschwindigkeit GHSV über das Gesamtsystem [h⁻¹] | 38.700 |
| Untersuchter Temperaturbereich [°C]: | 100 bis 450°C |
| Ausgewerteter Temperaturbereich [°C]: | 200 bis 400°C |
| Aufheizrate [°/min]: | 14 |
| Konditionierung vor Meßbeginn: | Aufheizen auf 500°C mit 35°/min in Meßgas und Abkühlen auf 100°C |

| **Abgasanalytik** | |
|---|---|
| Online-Bestimmung von NOₓ. NO nach Dieselpartikelfilter: | CLD / Ecophysics |
| Online-Bestimmung von HC nach Dieselpartikelfilter: | Thermo-FID / Emerson Analytical |

Aus der Bestimmung des Stickoxid-Gehaltes und des NO- bzw. NO₂-Gehaltes im Gas vor Eintritt in den Oxidationskatalysator (Dosierwerte) und nach Austritt aus dem Dieselpartikelfilter (gemessene Werte) wurde zunächst der NO-Umsatz über dem Gesamtsystem (Oxidationskatalysator und Dieselpartikelfilter) als Funktion der Temperatur bestimmt. Figur 1 zeigt beispielhaft ein typisches Ergebnis. Zur Bestimmung des mittleren, nach Dieselpartikelfilter eingestellten NO₂/NOₓ-Verhältnisses über den Temperaturbereich 200 bis 400°C wurde durch Integration der NO-Umsatzkurve von 200°C bis 400°C der mittlere NO₂-Anteil im Gas bestimmt und zur Summe aus sich selbst und der Fläche oberhalb der Kurve (bis 100 %) im gleichen Temperaturbereich in Beziehung gesetzt. Figur 2 zeigt das so erhaltene NO₂/NOₓ-Verhältnis, das über den getesteten Systemen im Temperaturbereich 200 bis 400°C im Mittel erzielt wird.

In einer Vorrichtung gemäß Anspruch 1, in der abströmseitig zum Dieselpartikelfilter eine Einbringvorrichtung für ein Reduktionsmittel aus einer externen Reduktionsmittelquelle und ein SCR-Katalysator zur Entfernung von Stickoxiden angeordnet ist, muß, um eine durchgehend ausreichende Entstickungswirkung des nachgeschalteten SCR-Katalysators zu gewährleisten ein NO₂/NOₓ-Verhältnis zwischen 0,3 und 0,7 erreicht werden. Optimal ist ein NO₂/NOₓ-Verhältnis von 0,5. Figur 2 zeigt, daß das Mindestverhältnis von 0,3 bei den Vergleichssystemen nur von dem System VSYS_3 erreicht wird. Dagegen erreichen alle getesteten erfindungsgemäßen Systeme das Mindest-NO₂/NO-Verhähnis. Die besten Resultate werden mit dem System SYS_2 erzielt. Hierin liegt das Gesamt-Pd : Pt-Verhältnis bei 1 : 9,2. Das Verhältnis Pt : Pd im Oxidationskatalysator liegt bei 6 : 1. Das Verhältnis Pt : Pd in der katalytisch aktiven Beschichtung des Dieselpartikelfilters liegt bei 12 : 1.

Weiterhin wurde mit den Systemen ein sog. "Heat-up-Experiment" durchgeführt. In einem solchen "Heat-up-Experiment" wird untersucht, wie gut das System aus Oxidationskatalysator und Dieselpartikelfilter eine plötzliche auftretende, sehr hohe Konzentration langkettiger Kohlenwasserstoffverbindungen im Abgas umsetzen kann. Dazu wird zu einem definierten Zeitpunkt im ansonsten stationären Zustand n-Dodekan vor Oxidationskatalysator in den Abgasstrang eindosiert und erfasst, wieviel Kohlenwasserstoffe nach Dieselpartikelfilter durchbrechen. Aus dem Qotient aus [Dosierungskonzentration - Enddurchbruchswert] und Dosierungskonzentration ergibt sich außerdem ein Stationärumsatzwert für die langkettigen Kohlenwasserstoffe, aus dem sich ableiten läßt, mit welcher Intensität die HC-Oxidationsreaktion unter diesen erschwerten Bedingungen fortläuft. Kommt die Reaktion zum Erliegen ("Verlöscnen" des Oxidationskatalysators), so liegt dieser Umsatzendwert unterhalb von 10 %.

Nachstehende Tabelle fasst die im "Heat-up-Experiment" eingestellten Versuchsbedingungen zusammen:

| **Modellgaszusammensetzung** | |
|---|---|
| CO [Vppm]: | 350 |
| HC (n-Dodekan); [Vppm C₁]: | 8000 |
| NO [Vppm]: | 500 |
| H₂ [Vppm]: | 120 |
| CO₂ [Vol.-%]: | 10,7 |
| H₂O [Vol.-%]: | 10 |
| O₂ [Vol.-%]: | 6 |

| **Allgemeine Reaktionsbedingungen** | |
|---|---|
| Raumgeschwindigkeit GHSV über das Gesamtsystem [h⁻¹] | 38.700 |
| Temperatur [°C]: | 250°C |
| Konditionierung vor Meßbeginn: | Vorbehandlung bei 600°C / 30 min in Stickstoff |

| **Abgasanalytik** | |
|---|---|
| Online-Bestimmung von NOₓ, NO nach Dieselpartikelfilter: | CLD / Ecophysics |
| Online-Bestimmung von HC nach Dieselpartikeifilter: | Thernno-FID / Emerson Analytical |

Figur 3 zeigt beispielhaft ein typisches Ergebnis einer solchen Messung.

Figur 4 zeigt die für die getesteten Systeme erhaltenen Ergebnisse, wobei die HC-Durchbruchsendwerte in [Vppm] angegeben sind. Es ist deutlich zu erkennen, daß das Vergleichssystem VSYS_3. das das beste mittlere NO₂/NOₓ-Verhältnis nach Dieselpartikelfilter aufweist (s. Figur 2), auch den mit 2350 Vppm höchsten HC-Durchbruch und somit die schlechteste "heat-up-Performance" zeigt. Entsprechendes gilt leider tendenziell auch für das erfindungsgemäße System SYS_2. Eine kostenäquivalente Umverteilung des Edelmetalls vom Partikelfilter auf den vorgeschalteten Oxidationskatalysator unter Erhalt des Edelmetallverhältnisse (→ SYS_1) führt in einem solchen erfindungsgemäßen System jedoch dazu, daß der HC-Durchbruch auf weit unter 1000 Vppm (hier: 190 Vppm) abgesenkt werden kann, ohne daß dadurch das NO₂/NOₓ-Verhältnis den kritischen Wert von 0,3 unterschreitet. Auch an den erfindungsgemäßen Systemen SYS_3 und SYS_4 wird eine exzellente "heat-up-Performance" unter Beibehaltung guter NO₂/NOₓ-Raten erzielt.

Figur 5 faßt alle erhaltenen Modellgasergebnisse zusammen. Dargestellt sind der über dem Gesamtsystem erzielte HC-Umsatz [%] im "Heat-up-Experiment" und für das mittlere NO_{2/}NOₓVerhältnis für den Temperaturbereich 200 bis 400°C entsprechende Angaben als prozentualer NO₂-Anteil im NOₓ. Die detaillierte Betrachtung zeigt, daß der Zielkonflikt zwischen "heat-up-Performance" und ausreichender NO-Konvertierung unter den gegebenen experimentellen Randbedingungen am besten mit den erfindungsgemäßen Systemen SYS_3 und SYS_4 gelöst werden kann.

Zusammenfassend ist festzustellen, daß mit einem System nach Anspruch 1 alle eingangs genannten Aufgaben zufriedenstellend gelöst werden können. Bei Einhaltung der angegebenen Platin : Palladium-Verhältnisse in Oxidationskatalysator, Dieselpartikelfilter und Gesamtsystem kann in allen relevanten Betriebspunkten ein mittleres NO₂/NOₓ-Verhältnis nach Dieselpartikelfilter und vor SCR-Katalysator von mindestens 0,3 bei zugleich hinreichend guter "heat-up-Performance" des anströmseitig angeordneten Oxidationskatalysators während einer "aktiver" Partikelfilterregeneration sichergestellt werden.

## Patentansprüche

1. Vorrichtung zur Reinigung von Dieselabgasen, die in Strömungsrichtung des Abgases einen Oxidationskatalysator, ein Dieselpartikelfilter mit katalytisch aktiver Beschichtung, eine Einbringvorrichtung für ein Reduktionsmittel aus einer externen Reduktionsmittelquelle und einen SCR-Katalysator enthält, wobei der Oxidationskatalysator und die katalytisch aktive Beschichtung des Dieselpartikelfilters Palladium und Platin enthalten,
**dadurch gekennzeichnet,**
**daß** das Verhältnis der Gesamtmenge an Palladium zur Gesamtmenge an Platin zwischen 8 : 1 und 1 : 15 liegt, wobei zugleich das Verhältnis Platin : Palladium im Oxidationskatalysator nicht größer als 6 : 1 ist, während das Verhältnis Platin : Palladium in der katalytisch aktiven Beschichtung des Dieselpartikelfilters nicht geringer als 10 : 1 ist.

2. Vorrichtung nach Anspruch 1,
**dadurch gekennzeichnet,**
**daß** der Oxidationskatalysator aus einer Platin und Palladium enthaltenden katalytisch aktiven Beschichtung auf einem keramischen oder metallischen Durchflußwabenkörper besteht, das Dieselpartikelfilter aus einer Platin und Palladium enthaltenden katalytisch aktiven Beschichtung und einem Filterkörper besteht und das Volumenverhältnis von Durchflußwabenkörper zu Filterkörper zwischen 1 : 1,5 und 1 : 5 liegt.

3. Vorrichtung nach Anspruch 2,
**dadurch gekennzeichnet,**
**daß** das Filterkörper ausgewählt ist aus der Gruppe der Wandflußfiltersubstrate bestehend aus keramischem Material oder Siliciumcarbid.

4. Vorrichtung nach Anpspruch 3,
**dadurch gekennzeichnet,**
**daß** Platin aufgebracht ist auf einem oder mehreren oxidischen Trägermaterialien ausgewählt aus der Gruppe bestehend aus Aluminiumoxid, Lanthanoxid-stabilisiertes Aluminiumoxid, Alumosilikat, Siliciumdioxid, Titandioxid, Ceroxid, Cer-Zirkon-Mischoxid, Seftenerdmetall-Sesquioxid, Zeolith und Mischungen davon.

5. Vorrichtung nach Anspruch 3,
**dadurch gekennzeichnet,**
**daß** Palladium aufgebracht ist auf einem oder mehreren oxidischen Trägermaterialien ausgewählt aus der Gruppe bestehend aus Aluminiumoxid, Lanthanoxid-stabilisiertes Aluminiumoxid, Alumosilikat, Siliciumdioxid, Titandioxid, Ceroxid, Cer-Zirkon-Mischoxid, Seltenerdmetall-Sesquioxid, Zeolith und Mischungen davon.

6. Vorrichtung nach Anspruch 3,
**dadurch gekennzeichnet,**
**daß** Platin und Palladium aufgebracht sind auf einem oder mehreren oxidischen Trägermaterialien ausgewählt aus der Gruppe bestehend aus Aluminiumoxid, Lanthanoxid-stabilisiertes Aluminiumoxid, Alumosilikat, Siliciumdioxid, Titandioxid. Ceroxid, Cer-Zirkon-Mischoxid, Seltenerdmetall-Sesquioxid, Zeolith und Mischungen davon.

7. Verfahren zur Reinigung von Dieselabgasen,
**dadurch gekennzeichnet,**
**daß** die zu reinigenden Dieselabgase durch eine Vorrichtung nach einem der vorstehenden Ansprüche geleitet werden.

## Claims

1. Device for the purification of diesel exhaust gases, which device comprises, in the flow direction of the exhaust gas, an oxidation catalyst, a diesel particulate filter with catalytically active coating, a device for introducing a reducing agent from an external reducing agent source, and an SCR catalyst, wherein the oxidation catalyst as well as the catalytically active coating of the diesel particulate filter contains palladium and platinum,
**characterized**
**in that** the ratio of the total quantity of palladium to the total quantity of platinum is between 8 : 1 and 1 : 15, with the ratio of platinum : palladium in the oxidation catalyst at the same time being not greater than 6 : 1, while the ratio of platinum : palladium in the catalytically active coating of the diesel particulate filter is not lower than 10 : 1.

2. Device according to Claim 1,
**characterized**
**in that** the oxidation catalyst is composed of a platinum- and palladium-containing catalytically active coating on a ceramic or metal throughflow honeycomb body, the diesel particulate filter is composed of a platinum- and palladium-containing catalytically active coating and a filter body, whereby the volume ratio of throughflow honeycomb body to filter body is between 1 : 1.5 and 1 : 5.

3. Device according to Claim 2,
**characterized**
**in that** the filter body is selected from the group of wall-flow filter substrates consisting of ceramic material or silicon carbide.

4. Device according to Claim 3,
**characterized**
**in that** platinum is supported on one or more oxidic support materials selected from the group consisting of aluminium oxide, lanthanum-oxide-stabilized aluminium oxide, aluminosilicate, silicon dioxide, titanium dioxide, cerium oxide, cerium-zirconium mixed oxide, rare-earth-metal sesquioxide, zeolite and mixtures thereof.

5. Device according to Claim 3,
**characterized**
**in that** palladium is supported on one or more oxidic support materials selected from the group consisting of aluminium oxide, lanthanum-oxide-stabilized aluminium oxide, aluminosilicate, silicon dioxide, titanium dioxide, cerium oxide, cerium-zirconium mixed oxide, rare-earth-metal sesquioxide, zeolite and mixtures thereof.

6. Device according to Claim 3,
**characterized**
**in that** platinum and palladium are supported on one or more oxidic support materials selected from the group comprising aluminium oxide, lanthanum-oxide-stabilized aluminium oxide, aluminosilicate, silicon dioxide, titanium dioxide, cerium oxide, cerium-zirconium mixed oxide, rare-earth-metal sesquioxide, zeolite and mixtures thereof.

7. Method for purification of diesel exhaust gases,
**characterized**
**in that** the diesel exhaust gases to be purified are conducted through a device according to one of the preceding claims.

## Revendications

1. Dispositif d'épuration de gaz d'échappement de moteurs diesel, qui contient dans la direction d'écoulement des gaz d'échappement un catalyseur d'oxydation, un filtre à particules diesel doté d'un revêtement catalytiquement actif, un dispositif d'apport d'un agent de réduction depuis une source externe d'agent de réduction et un catalyseur SCR,
le catalyseur d'oxydation et le revêtement catalytiquement actif du filtre à particules diesel contenant du palladium et du platine,
**caractérisé en ce que**
le rapport entre la quantité totale de palladium et la quantité totale de platine est compris entre 8 : 1 et 1 : 15, et en même temps le rapport platine : palladium dans le catalyseur d'oxydation n'est pas supérieur à 6 : 1 tandis que le rapport platine : palladium dans le revêtement catalytiquement actif du filtre à particules diesel n'est pas inférieur à 10 : 1.

2. Dispositif selon la revendication 1, **caractérisé en ce que** le catalyseur d'oxydation est constitué d'un revêtement catalytiquement actif contenant du platine et du palladium disposé sur un corps céramique ou métallique de traversée en nid d'abeilles, **en ce que** le filtre à particules diesel est constitué d'un revêtement catalytiquement actif qui contient du platine et du palladium et d'un corps de filtre et **en ce que** le rapport entre le volume du corps de traversée en nid d'abeilles et le volume du corps de filtre est compris entre 1 : 1,5 et 1 : 5.

3. Dispositif selon la revendication 2, **caractérisé en ce que** le corps de filtre est sélectionné dans l'ensemble des substrats de filtre à écoulement le long des parois constitué d'un matériau céramique ou de carbure de silicium.

4. Dispositif selon la revendication 3, **caractérisé en ce que** le platine est appliqué sur un ou plusieurs matériaux oxydés de support sélectionnés dans l'ensemble constitué de l'oxyde d'aluminium, de l'oxyde d'aluminium stabilisé par oxyde de lanthane, des aluminosilicates, du dioxyde de silicium, du dioxyde de titane, de l'oxyde de cérium, de l'oxyde mixte de cérium et de zirconium, de sesquioxydes de métaux des terres rares, de zéolithes et de leurs mélanges.

5. Dispositif selon la revendication 3, **caractérisé en ce que** le palladium est appliqué sur un ou plusieurs matériaux de support oxydés sélectionnés dans l'ensemble constitué de l'oxyde d'aluminium, de l'oxyde d'aluminium stabilisé par oxyde de lanthane, des aluminosilicates, du dioxyde de silicium, du dioxyde de titane, de l'oxyde de cérium, de l'oxyde mixte de cérium et de zirconium, des sesquioxydes de métaux des terres rares, des zéolithes et de leurs mélanges.

6. Dispositif selon la revendication 3, **caractérisé en ce que** le platine et le palladium sont appliqués sur un ou plusieurs matériaux de support oxydés sélectionnés dans l'ensemble constitué de l'oxyde d'aluminium, de l'oxyde d'aluminium stabilisé par oxyde de lanthane, des aluminosilicates, du dioxyde de silicium, du dioxyde de titane, de l'oxyde de cérium, de l'oxyde mixte de cérium et de zirconium, des sesquioxydes de métaux des terres rares, des zéolithes et de leurs mélanges.

7. Procédé d'épuration de gaz d'échappement de moteur diesel, **caractérisé en ce que** les gaz d'échappement de moteur diesel à épurer sont conduits dans un dispositif selon l'une des revendications précédentes.
